# EUROPEAN PATENT APPLICATION

(11) **EP 2 100 779 A1**
(43) Date of publication of application: **16.09.2009**
(21) Application number: 08152547.9
(22) Date of filing: 10.03.2008
(51) Int. Cl.: B60R 21/015, G01G 19/414, H01R 9/00, B60N 2/00

(54) **Seat sensor assembly**

(71) Applicant: IEE INTERNATIONAL ELECTRONICS & ENGINEERING S.A., 6468 Echternach (LU)
(72) Inventor: Canut, Olivier, 53200, Aze (FR); Chaudron, Julien, 57570, Cattenom (FR); Wathieu, Guy, 8157, Bridel (LU)
(74) Representative: Office Freylinger

(57) **Abstract**

A sensor assembly comprises a foil based sensor and a connection cable for connecting said foil based sensor to a control circuit. The foil based sensor comprises at least one first flexible carrier foil and at least one electrode arrangement applied onto a first surface of said first flexible carrier foil, said least one electrode arrangement being arranged for forming at least one active zone of said foil based sensor. The electrode arrangement further comprises at least one conductive trace or conductive track extending from a connection region of said first flexible carrier foil towards said active zone of said foil based sensor. The connecting cable is electrically connected to said at least one conductive trace in said connection region of said first flexible carrier foil. According to the invention, the connecting cable comprises at least one flexible flat cable, and an uninsulated portion of said flexible flat cable is mechanically secured by means of a first coverlay film to the connecting region of said first flexible carrier foil so that said uninsulated portion of said flexible flat cable is in contact with said conductive trace, thereby establishing an electrical contact between said flexible flat cable and said conductive trace, said first coverlay film being laminated in the connection region of said first flexible carrier foil over said uninsulated portion of said flexible flat cable and said conductive trace and onto said first flexible carrier foil.

## Description

### Technical field

The present invention generally relates to the art of flexible foil based sensors and more specifically to foil based seat sensors to be integrated into the seating surface of a seat or the resting surface of a bed or the like.

### Background Art

It is well known in the art of detecting and/or classifying occupancy to use flexible foil based sensors integrated into a seat or a bed in order to detect certain parameters relating to the occupancy of said seat or said bed. One typical application of such flexible foil based sensors is the detection of the presence of a passenger on a vehicle seat, wherein a secondary restraint system associated to said vehicle seat is only activated if the vehicle seat is actually occupied by a human being.

Foil based sensors exist in different types. Foil-based pressure sensors for instance typically comprise a first carrier foil and a second carrier foil, which are laminated together by a spacer. The spacer comprises at least one opening or cut-out defining an active area of the sensor, where the first and second carrier foil face each other at a certain distance. Electrode arrangements are arranged in the active area of the sensor in such a way, that under the influence of a pressure acting on the sensor, the first and second carrier foils are bent together and that an electrical contact is established between individual electrodes. Depending on the type of sensor, a pressure sensitive material may be applied to at least one of the electrodes, such that the resistance of the electrical contact depends on the pressure exerted onto the sensor.

Another type of pressure sensors uses only a single carrier foil which carriers at lest two electrodes and a layer of pressure sensitive material spanning in the active area of the sensor over the two electrodes. The pressure sensitive material in this case is a material the inner resistance of which varies with a compression or deformation of the layer of pressure sensitive material. As with the previously described sensor, the electrical resistance between the two electrodes is indicative of the pressure acting on the active area.

In operation, the electrical resistance between the electrodes is determined by an associated control circuit, which is connected to the flexible sensor by means of a connection cable. The connection cable is usually connected to the flexible sensor by a crimp connection, in which the conductive wires of the connection cable are crimped to conductive traces in a connection area of the flexible sensor. The crimp connection is subsequently encased in a hot melt in order to ensure a mechanical stability of the connection and a protection against humidity.

Another type of commonly used sensing systems comprises capacitive detection systems. In these capacitive systems, a usually planar capacitive electrode is arranged in the seat and operatively coupled to a control circuit. The capacitive electrode may comprise a foil-based electrode, which consists of an electrode arrangement applied on a flexible carrier foil. In operation, an alternating electrical signal is supplied to the capacitive electrode and the control circuit determines a parameter which is representative of the capacitive coupling between the capacitive electrode and the environment.

In use, the above-described sensors are usually integrated into a seating surface of a seat or a resting surface of a bed. The sensor is usually arranged on the foam core of the seat or a mattress, immediately below the trim of the foam core. It is clear that in this position close to the occupant, comfort requirements are extremely high. This applies specifically to the connection area of the sensor, where the connection cable is connected to the conductive traces of the sensor. Due to the thickness of the state of the art crimp connections with encasing hot melt, the connection area for these connections cannot be located in the seating area of the seat or the resting area of the seat, otherwise the connection would seriously impair the comfort of the seat. For this reason, the connection area of the state of the art sensors is located on a flexible tab or tail portion of the carrier foil, which extends from the main sensing region of the sensor, usually located in a centre of a seating or resting surface, towards an outer region of the seating or resting surface, where the arrangement of the crimp connection causes less problems in view of comfort considerations.

In a different type of state of the art sensors, the electronic control circuit is directly clipped to the conductive traces of the sensor. It is clear that this type of connection further increases the thickness of the connection area compared to the classical crimp connection. It follows that for this connection type, the tail portion of the carrier foil has to be even longer in order to displace any comfort impairing elements from within the seating surface.

While this state of the art sensor assembly generally shows satisfying results regarding comfort considerations, it has nevertheless several drawbacks. First of all, the need for an elongated tab for bringing the connection region of the sensor outside of the seating or resting surface increases the overall consumption of raw materials for the manufacturing of the sensor. In fact, in the case of foil-based pressure sensors, the tab consists usually of a laminate of two carrier foils and a spacer layer arranged between these carrier foils, so that the overall consumption of film material is increased. Furthermore, the specific form of the sensor with a long connection tab leads to a non-compact overall shape of the sensor, which complicates an optimal utilization of the film material, which is provided in sheets of a specific size, and therefore leads to increased material waste.

Finally, the shape and the size of the connection tab has to be adapted to the specific design of each seating or resting surface, resulting in an individual sensor adapted for each specific seat configuration or bed configuration. Accordingly standardization of the sensors is rendered almost impossible.

### Technical problem

The object of the present invention is to provide a sensor assembly which at least partially alleviates one or more of the above drawbacks.

### General Description of the Invention

This object is solved by a sensor assembly according to claim 1. This sensor assembly comprises a foil based sensor and a connection cable for connecting said foil based sensor to a control circuit. The foil based sensor comprises at least one first flexible carrier foil and at least one electrode arrangement applied onto a first surface of said first flexible carrier foil, said least one electrode arrangement being arranged for forming at least one active zone of said foil based sensor. The electrode arrangement further comprises at least one conductive trace or conductive track extending from a connection region of said first flexible carrier foil towards said active zone of said foil based sensor. The at least on connecting cable for connecting said foil based sensor to a control circuit is electrically connected to said at least one conductive trace in said connection region of said first flexible carrier foil. According to the invention, the connecting cable comprises at least one flexible flat cable, and an uninsulated portion of said flexible flat cable is mechanically secured by means of a first coverlay film to the connecting region of said first flexible carrier foil so that said uninsulated portion of said flexible flat cable is in contact with said conductive trace, thereby establishing an electrical contact between said flexible flat cable and said conductive trace, said first coverlay film being laminated or bonded in the connection region of said first flexible carrier foil over said uninsulated portion of said flexible flat cable and said conductive trace and onto said first flexible carrier foil.

According to the present invention, the state of the art crimp connection between the conductive trace or traces of the sensor and the connection cable is replaced by a connection, in which an uninsulated portion of a cable is simply arranged in electrical contact with the conductive trace and held in place by the coverlay film laminated over the connection area. The coverlay film plays a double role in the assembly of ensuring a mechanical fixing of the cable to the conductive trace and of protection against environmental influences such as humidity and the like. In order to reduce the overall thickness of the connection, the cable is preferably a flat flexible cable comprising e.g. one or more flat copper wires in a flexible insulating material. These flat cables are very flexible are thus very easy to integrate into the seating surface of the seat.

In contrast to the crimp connection with associated hot melt encasing, this type of connection is very thin and highly flexible, so that the connection according to the present invention may be arranged in the seating or resting area of the seat of bed without being felt by the occupant. Accordingly the connection region of the flexible sensor may be located in the immediate vicinity of the effective sensing area and thus does not need to be arranged on an elongated tab portion. The flexible sensor therefore has a compact overall shape so that material utilization may be optimized as a higher number of sensors can be produced of the same sheet of film material.

Furthermore, with the current invention it is the flexible cable that spans the distance between the sensing area of the sensor and a location outside of the seating or resting surface, where the sensor may be coupled to the control unit, and not the connection trail which is an integral part of the flexible sensor. Accordingly with the present invention it is the length of the cable which has to be adapted to the specific design of a seat or bed and the resulting specific arrangement location of the flexible sensor, and not the sensor itself. Thus the flexible sensor itself may be standardized so that the same sensor may be used for totally different applications and with totally different seat configurations. Such standardization leads of course to reduced manufacturing costs for the sensor.

In order to further enhance the mechanical stability of the connection between the conductive traces and the flexible flat cable, a layer of electrically conductive or anisotropic adhesive may be arranged between said uninsulated portion of said flexible flat cable and said conductive trace. After setting of the adhesive, the adhesive increases the mechanical stability of the contact arrangement and at the same time ensures a suitable electrical connection between the conductive trace or traces and the flexible flat cable. It will be appreciated that the layer of anisotropic material may be applied by printing or dispensing a liquid adhesive onto the conductive traces or by arranging a layer of adhesive film onto the conductive traces prior to the arrangement of the uninsulated portion of the flexible cable thereon. The setting of the anisotropic adhesive is preferably achieved simultaneously with the setting and bonding of the coverlay film e.g. by applying pressure and/or heat to the connection region after the different elements have been arranged together.

In a preferred embodiment of the invention, the first flexible carrier foil comprises an indent in said connection region, said indent being sufficiently wide for receiving an insulated portion of said flexible flat cable. Said at least one conductive trace then ends substantially at a base of said indent. In this embodiment said flexible flat cable is arranged such that an insulated portion of said flexible flat cable which is adjacent to said uninsulated portion of said flexible flat cable is received in said indent and said first coverlay film extends across said indent and said insulated portion of said flexible flat cable and is laminated or bonded to said insulated portion of said flexible flat cable and to those portions of said first flexible carrier foil, which are adjacent to said indent. This embodiment of the sensor assembly enables to bond or laminate the coverlay film not only to the effective connection area but also to the surrounding region and there more specifically to the insulated portion of the flexible flat cable. This arrangement further increases the mechanical stability of the connection. It will be appreciated that, as the non-insulated portion of the flexible flat cable is arranged inside of the indent, this increase in mechanical stability goes without an increase of thickness of the connection assembly.

In a preferred variant of this embodiment, a second coverlay film is laminated or bonded to a second surface of the said first flexible carrier foil, said second surface being opposite of said first surface, wherein said second coverlay film extends across said indent and said insulated portion of said flexible flat cable and is laminated or bonded to said insulated portion of said flexible flat cable and to those portions of said first flexible carrier foil, which are adjacent to said indent. The second coverlay film again increases the mechanical stability of the assembly. Furthermore, the second coverlay advantageously seals the connection area on the second surface of the flexible carrier foil, so that the protection against environmental influences such as humidity is improved.

It will be appreciated, that the foil based sensor may be of any possible type, such as e.g. foil-based pressure sensors or foil-based capacitive electrodes etc. In case of foil-type pressure sensors, wherein said foil based sensor comprises at least one second flexible carrier foil, said second flexible carrier foil being arranged at a certain distance from said first flexible carrier foil above the fist surface of said first carrier foil by means of a spacer, said second flexible carrier foil and said spacer preferably each comprise a cut-out or indent in facing relationship with said connecting region of said first flexible carrier foil such that the connecting region of said first flexible carrier foil is accessible from above. In that case, the first coverlay film advantageously extends from said connecting region of said first carrier foil beyond a border of said second flexible carrier foil so as to prevent penetration of humidity in this area.

The present invention also relates to a method for manufacturing a sensor assembly, in which said sensor assembly comprises a foil based sensor and a connection cable for connecting said foil based sensor to a control circuit, wherein said foil based sensor comprises at least one first flexible carrier foil and at least one electrode arrangement applied onto said first flexible carrier foil, said least one electrode arrangement being arranged for forming at least one active zone of said foil based sensor, said electrode arrangement further comprising at least one conductive trace extending from a connection region of said first flexible carrier foil towards said active zone of said foil based sensor, said sensor assembly further comprising at least on connecting cable for connecting said foil based sensor to a control circuit, said connecting cable being electrically connected to said at least one conductive trace in said connection region of said first flexible carrier foil. According to the invention said method comprises the steps of
providing a flat flexible cable as connecting cable;
arranging an uninsulated portion of said of said flexible flat cable in the connection region of said first flexible carrier foil on the conductive trace;
arranging a coverlay film on top of said uninsulated portion of said flexible flat cable and said conductive trace, said coverlay film extending over and beyond said uninsulated portion of said flexible flat cable and said conductive trace; said coverlay film comprising a flexible foil and a thermosetting adhesive applied to said foil;
applying pressure and heat to said connection region so as to thermoset said thermosetting adhesive of said coverlay film thereby mechanically securing said uninsulated portion of said flexible flat cable to the connecting region of said first flexible carrier foil so that said uninsulated portion of said flexible flat cable is in contact with said conductive trace, and at the same time establishing an electrical contact between said flexible flat cable and said conductive trace.

A preferred embodiment of the manufacturing method further comprises the step of applying a layer of electrically conductive adhesive on the conductive trace in the connection region of said first flexible carrier foil prior to the arrangement of the uninsulated portion of said of said flexible flat cable thereon.

In another preferred embodiment, a second coverlay film is laminated or bonded to a second surface of the said first flexible carrier foil, said second surface being opposite of said first surface. The said second coverlay film is preferably arranged on the second surface of the said first flexible carrier foil prior to the application of pressure and heat to said connection region.

It will be appreciated, that the first coverlay, the layer of conductive adhesive and the second coverlay film are preferably laminated and set in one single final step, where heat and/or pressure are applied to the connection area of the flexible sensor in order to cause the adhesive layers to set simultaneously.

### Brief Description of the Drawings

The present invention will be more apparent from the following description of a not limiting embodiment with reference to the attached drawings, wherein
- Fig.1:: a side view of a vehicle seat with an embodiment of a sensor assembly according to the present invention mounted on the seating surface, wherein the flexible sensor is shown as a foil-based pressure sensor;
- Fig.2:: a cross section of an active area of an embodiment of the flexible sensor;
- Fig.3:: a top view on the connection region of the flexible sensor, prior to the connection of the flat connection cable;
- Fig.4:: a top view on the connection region of a foil-type sensor after the arrangement of the flat connection cable;
- Fig.5:: a top view on the connection region of the sensor after the lamination of the coverlay films;
- Fig.6:: an enlarged cross-section of the connecting region of the sensor assembly.

### Description of Preferred Embodiments

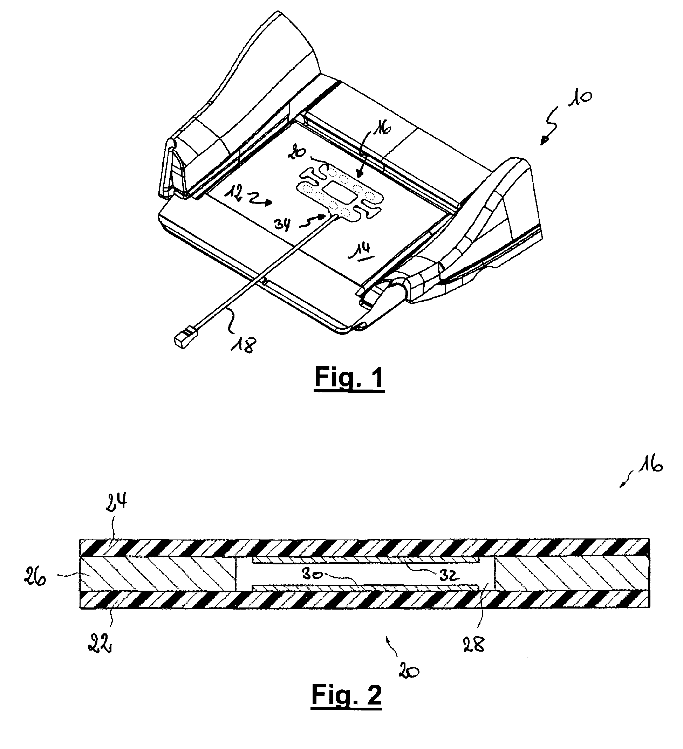

Fig. 1 shows a vehicle seat 10 with an embodiment of a sensor assembly 12 according to the present invention mounted on the seating surface 14. The sensor assembly comprises a foil based sensor 16 and a connection cable 18 for connecting said foil based sensor to a (not shown) control circuit.

In the shown embodiment, the foil based sensor is a foil-type pressure sensor which comprises a number of active areas 20, in which a pressure acting on the sensor can be determined. The sensor 16 comprises a first carrier foil 22 and a second carrier foil 24, which are arranged at a certain distance by means of a spacer 26 (see also Fig. 2). The spacer 26 may e.g. comprise a double-sided bonding sheet. In the active area, generally referenced as 20, of the pressure sensor 16, the spacer 26 comprises an opening or cut-out 28 such that, in the active area 20, the two carrier foils 22 and 24 face each other at a certain distance.

Electrode arrangements 30 and 32 are arranged in the active area 20 on the inner surfaces of the carrier foils 22 and 24 in such a way that an electrical contact is established between the electrode arrangements 30 and 32 if said carrier foils are pressed together. In the shown embodiment, one electrode arrangement 30 or 32 is arranged on each of said carrier foils 22 and 24 in a facing relationship. It should however be noted that other layouts, e.g. with two spaced electrode arrangements 30 and 32 arranged on one of the carrier foils and a shunt element arranged on the second carrier foil, are also possible.

The electrode arrangements may comprise electrodes, wherein at least one of the electrode arrangements comprises a layer of pressure sensitive material. Such a layer of pressure sensitive material confers a pressure depending behavior to the pressure sensor. It should be noted that the electrode arrangements are usually printed onto the respective carrier foils using a screenprinting process prior to the laminating process, in which the carrier foils and the spacer are laminated together.

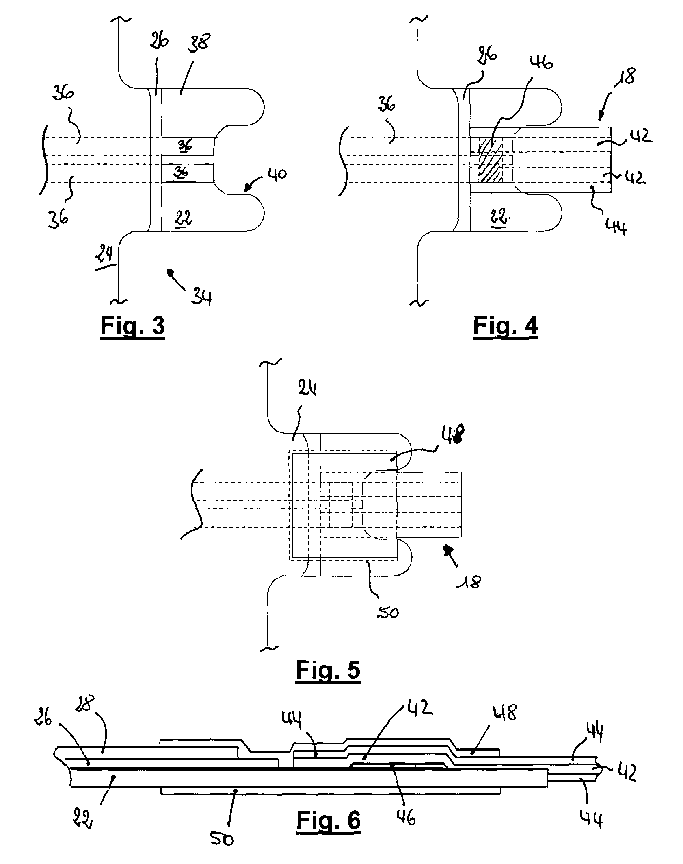

The electrode arrangements 30 and 32 may further comprise conductive traces 36 (see also Fig. 3), which extend from the active area 20 to a connection region 34 of the sensor. In this connection region 34, one end of flexible flat cable 18 is connected to the flexible sensor 16, the other end being provided with a suitable plug connector for connecting the sensor to the control circuit.

Figures 3 to 5 show views of the different elements of the connection assembly in the connection portion of the flexible sensor 16 and Fig. 6 shows a cross-section of the connection assembly. Fig. 3 shows a top view on the connection region 34 of the flexible sensor 16. In the connection region 34, the carrier foil 22 comprises a small tab portion 38, to which the flexible flat cable 18 is to be fastened. Spacer layer 26 and upper carrier foil 24 are not provided with a corresponding tab portion, so that spacer layer 26 and carrier foil 24 do not cover the lower carrier foil 22 in the front portion of the tab 38, thus leaving conductive traces 36 on carrier foil 22 accessible from above.

The tab portion comprises at its front a recess 40, which is sufficiently wide to accommodate the flexible cable 18. The conductive traces 36 extend into the tab portion 38 and end substantially at the base of the recess 40.

Fig. 4 shows a top view of the connecting region 34 of the flexible sensor, after the flat cable 18 has been arranged into its position. Flexible flat cable comprises a number of flat conductive wires 42, e.g. flat copper wires, in a flexible insulating material 44. The pitch of the flat conductive wires 42 is preferably substantially equal to the pitch of the conductive traces 36 of the flexible sensor.

The front end portion of the flat cable 18 is preferably uninsulated at least at the surface, facing the conductive traces. Flat cable 18 is then arranged on the tab portion 38 in such a way, that the conductive wires 42 in the uninsulated portion are in mechanical and electrical contact to the conductive traces 36 of the lower carrier foil 22. In order to maximize the contact surface between the wires 42 and the conductive traces 36, the flat cable 18 preferably extends from the front end of the tab portion up to the front border of the spacer 26.

In order to increase the stability of the connection after the final assembly step, a layer of electrically conductive adhesive is preferably applied across the conductive traces 36 prior to the arrangement of the cable on the traces. This layer of anisotropic conductive adhesive is shown as hatched rectangle 46 in Fig. 4.

Fig. 5 shows the connection region 34 after the final assembly of the connection assembly. A top coverlay film 48 is arranged on top of the connecting end portion of cable 18. Top coverlay film 48 is preferably dimensioned so as to extend across the entire connection zone and the indent or recess 40 of the connection portion and partially overlaps those portions of carrier foil 22, which are adjacent to the recess 40. In the other direction, the top coverlay film 48 preferably extends beyond the front border of the top carrier foil 24 so that the coverlay film 48 partially overlaps the front portion of said top carrier foil 24.

Similar to top coverlay film 48, a bottom coverlay film 50 is arranged below carrier foil 22. Bottom coverlay film 50 is preferably dimensioned so as to extend across the entire connection zone and the indent or recess 40 of the connection portion and partially overlaps those portions of carrier foil 22, which are adjacent to the recess 40. It will be noted that top coverlay film 48 and bottom coverlay film 50 may be different in size but are preferably substantially identical in size and form.

After the different elements are assembled together as described above, the connecting portion 34 of the flexible sensor is submitted to heat and pressure so that the adhesives of the coverlay films 48 and 50 as well as the anisotropic adhesive 46 are set and the different elements are securely laminated together.

It should be noted that although the preferred embodiment of the sensor assembly has been described in the context of automotive vehicle seat sensors, the sensor assembly is not limited to such automotive applications. In fact, the sensor assembly according to the present invention may be used for the detection of occupancy in any type of seat or resting place, such as cinema or theatre seats or beds e.g. in a hospital or the like.

While the present invention has been described in more detail with reference to a foil-based pressure sensor, it will be apparent to the skilled person, that the present invention is also applicable to other types of foil-based sensors, such as foil-based capacitive electrodes or the like.

### Legend:

- 10: vehicle seat
- 12: sensor assembly
- 14: seating surface
- 16: foil based sensor
- 18: connection cable
- 20: active area
- 22: first carrier foil
- 24: second carrier foil
- 26: spacer
- 28: opening or cut-out
- 30: electrode arrangement
- 32: electrode arrangement
- 34: connection region
- 36: conductive traces
- 38: tab portion
- 40: recess
- 42: conductive wires
- 44: insulating material
- 46: layer of electrically conductive adhesive
- 48: top coverlay film
- 50: bottom coverlay film

## Claims

1. A sensor assembly comprising a foil based sensor and a connection cable for connecting said foil based sensor to a control circuit, wherein said foil based sensor comprises at least one first flexible carrier foil and at least one electrode arrangement applied onto a first surface of said first flexible carrier foil, said least one electrode arrangement being arranged for forming at least one active zone of said foil based sensor, said electrode arrangement further comprising at least one conductive trace extending from a connection region of said first flexible carrier foil towards said active zone of said foil based sensor, and wherein said connecting cable is electrically connected to said at least one conductive trace in said connection region of said first flexible carrier foil; **characterized in that**
said connecting cable comprises at least one flexible flat cable, and **in that** an uninsulated portion of said flexible flat cable is mechanically secured by means of a first coverlay film to the connecting region of said first flexible carrier foil so that said uninsulated portion of said flexible flat cable is in contact with said conductive trace, thereby establishing an electrical contact between said flexible flat cable and said conductive trace, said first coverlay film being laminated in the connection region of said first flexible carrier foil over said uninsulated portion of said flexible flat cable and said conductive trace and onto said first flexible carrier foil.

2. The sensor assembly as claimed in claim 1, further comprising a layer of electrically conductive adhesive arranged between said uninsulated portion of said flexible flat cable and said conductive trace.

3. The sensor assembly as claimed in any one of claims 1 and 2, wherein said first flexible carrier foil comprises an indent in said connection region, said indent being sufficiently wide for receiving an insulated portion of said flexible flat cable, wherein said at least one conductive trace ends substantially at a base of said indent, wherein said flexible flat cable is arranged such that an insulated portion of said flexible flat cable which is adjacent to said uninsulated portion of said flexible flat cable is received in said indent and wherein said first coverlay film extends across said indent and said insulated portion of said flexible flat cable and is laminated to said insulated portion of said flexible flat cable and to those portions of said first flexible carrier foil, which are adjacent to said indent.

4. The sensor assembly as claimed in claim 3, wherein a second coverlay film is laminated to a second surface of the said first flexible carrier foil, said second surface being opposite of said first surface, wherein said second coverlay film extends across said indent and said insulated portion of said flexible flat cable and is laminated to said insulated portion of said flexible flat cable and to those portions of said first flexible carrier foil, which are adjacent to said indent.

5. The sensor assembly as claimed in any one of claims 1 to 4, wherein said foil based sensor comprises at least one second flexible carrier foil, said second flexible carrier foil being arranged at a certain distance from said first flexible carrier foil above the fist surface of said first carrier foil by means of a spacer, wherein said second flexible carrier foil and said spacer each comprise a cut-out or indent in facing relationship with said connecting region of said first flexible carrier foil and wherein said first coverlay film extends from said connecting region of said first carrier foil beyond a border of said second flexible carrier foil.

6. A method for the manufacture of a sensor assembly, said sensor assembly comprising a foil based sensor and a connection cable for connecting said foil based sensor to a control circuit, wherein said foil based sensor comprises at least one first flexible carrier foil and at least one electrode arrangement applied onto said first flexible carrier foil, said least one electrode arrangement being arranged for forming at least one active zone of said foil based sensor, said electrode arrangement further comprising at least one conductive trace extending from a connection region of said first flexible carrier foil towards said active zone of said foil based sensor, said sensor assembly further comprising at least on connecting cable for connecting said foil based sensor to a control circuit, said connecting cable being electrically connected to said at least one conductive trace in said connection region of said first flexible carrier foil, said method comprising the steps of
providing a flat flexible cable as connecting cable;
arranging an uninsulated portion of said of said flexible flat cable in the connection region of said first flexible carrier foil on the conductive trace;
arranging a coverlay film on top of said uninsulated portion of said flexible flat cable and said conductive trace, said coverlay film extending over and beyond said uninsulated portion of said flexible flat cable and said conductive trace; said coverlay film comprising a flexible foil and a thermosetting adhesive applied to said foil;
applying pressure and heat to said connection region so as to thermoset said thermosetting adhesive of said coverlay film thereby mechanically se-curing said uninsulated portion of said flexible flat cable to the connecting region of said first flexible carrier foil so that said uninsulated portion of said flexible flat cable is in contact with said conductive trace, and at the same time establishing an electrical contact between said flexible flat cable and said conductive trace.

7. The method for the manufacture of a sensor assembly as claimed in claim 6, further comprising the step of applying a layer of conductive adhesive on the conductive trace in the connection region of said first flexible carrier foil prior to the arrangement of the uninsulated portion of said of said flexible flat cable thereon.

8. The method for the manufacture of a sensor assembly as claimed in any one of claims 6 and 7, wherein a second coverlay film is laminated to a second surface of the said first flexible carrier foil, said second surface be-ing opposite of said first surface.

9. The method for the manufacture of a sensor assembly as claimed in claim 8, wherein said second coverlay film is arranged on the second surface of the said first flexible carrier foil prior to the application of pressure and heat to said connection region.
